# EUROPÄISCHE PATENTSCHRIFT

(11) **EP 2 126 700 B1**
(45) Veröffentlichungstag und Bekanntmachung des Hinweises auf die Patenterteilung: **14.07.2010**
(21) Anmeldenummer: 07702407.3
(22) Anmeldetag: 31.01.2007
(51) Int. Cl.: G06F 9/48

(54) **STEUERUNG DES LAUFZEITVERHALTENS VON PROZESSEN**
CONTROL OF THE RUN TIME BEHAVIOR OF PROCESSES
RÉGULATION DU COMPORTEMENT DE PROCESSUS EN COURS D'EXPLOITATION

(43) Veröffentlichungstag der Anmeldung: 02.12.2009
(73) Patentinhaber: Siemens Aktiengesellschaft, 80333 München (DE)
(72) Erfinder: FÖRTSCH, Rainer, 91077 Kleinsendelbach (DE); GÖTZ, Franz-Josef, 91180 Heideck (DE); HAARDÖRFER, Jürgen, 90574 Rosstal (DE); STRÖMSDÖRFER, Christian, 90453 Nürnberg (DE); VOLKMANN, Frank, 90475 Nürnberg (DE)
(86) Internationale Anmeldenummer: PCT/DE2007/000176
(87) Internationale Veröffentlichungsnummer: WO 2008/092412

(56) Entgegenhaltungen:
- EP-A1- 0 647 903
- MOSER M ET AL: "A survey of priority rules for FMS scheduling and their performance for the benchmark problem" PROCEEDINGS OF THE CONFERENCE ON DECISION AND CONTROL. TUCSON, DEC. 16, Bd. VOL. 3 CONF. 31, 16. Dezember 1992 (1992-12-16), Seiten 392-397, XP010108303 ISBN: 0-7803-0872-7

## Beschreibung

Die Erfindung betrifft ein Verfahren zur Steuerung des Laufzeitverhaltens von Prozessen eines Automatisierungssystems sowie ein entsprechendes Automatisierungssystem.

Ein derartiges Verfahren bzw. Automatisierungssystem kommt auf dem Gebiet der Automatisierungstechnik zum Einsatz, bei dem oft mehrere Aufgaben gleichzeitig erfüllt werden müssen. Zur Steuerung komplexer Vorgänge, wie z.B. der Produktion von Automobilen in einem Werk, werden Software-Systeme eingesetzt, die aus mehreren Programmen bzw. Prozessen bestehen (z.B. Produktionsdatenerfassung, Steuerung der Anlagen, Erfassung und Aufbereitung von Betriebsdaten / Statistiken etc.). Diese Prozesse müssen sich die vorhandene Rechenleistung teilen bzw. müssen die Rechenleistung mit anderen Systemen teilen. Die Zuteilung von Rechenleistung an Prozesse erfolgt in der Regel über die Prioritäten der entsprechenden Prozesse. Dabei sind die Prioritäten der entsprechenden Prozesse nicht über deren gesamte Laufzeit als gleich anzusehen, sondern abhängig von z.B. Tageszeiten (beispielsweise Betriebsstatistiken am Schichtende erstellen) oder Betriebszuständen. Ändern sich diese Rahmenbedingungen, dann sollten sich auch die Prioritäten der Prozesse entsprechend anpassen, um eine optimale Aufgabenbearbeitung zu erreichen.

In heute üblichen Multitasking-Betriebssystemen (z.B. Windows, Linux) werden Prozessen zur Ausführung bestimmte Zeitscheiben in Abhängigkeit von ihrer Priorität zugeteilt. Das bedeutet, dass Prozesse bzw. Threads (Untereinheiten von Prozessen zur Parallelausführung verschiedener logischer Programmablaufpfade), denen eine hohe Priorität zugeordnet wurde, bevorzugt ausgeführt werden, während hingegen andere, wartende Prozesse bzw. Threads mit niedrigerer Priorität weiter warten müssen. Prozessen / Threads wird entweder durch das Betriebssystem per "default" oder programmatisch (durch den Prozess selbst oder einen anderen mit entsprechenden Rechten) eine Priorität zugeordnet, die damit wesentlich die Ausführungsreihenfolge der Prozesse / Threads des Systems bestimmt. Abhängig von Prozessen zugewiesenen Prioritäten erfolgt die Zuteilung von Rechenleistung durch das Betriebssystem.

Bei den üblichen, heute eingesetzten Betriebssystemen entscheidet allein die Priorität von Prozessen / Threads über deren Ablaufverhalten, da der entsprechende Scheduler des Betriebssystems über keine zusätzlichen, semantischen Informationen zu den beteiligten Prozessen bzw. deren Aufgaben verfügt, die er für eine Entscheidung über die Zuteilung von Rechenleistung nutzen kann. Bei Multipurpose-Betriebssystemen kann das auch nicht erwartet werden, da hier ein generalisierender Ansatz verfolgt werden muss. Um das Laufzeitverhalten der einzelnen Prozesse an sich verändernde Randbedingungen (zeitliche Randbedingungen wie Schichtende oder ereignisgesteuerte Randbedingungen) anzupassen, bleibt bisher nur die Möglichkeit, innerhalb der Prozesse selbst Prioritätsentscheidungen und -änderungen programmatisch zu treffen.

Dies ist aber äußerst schwierig und deshalb meist nicht von Erfolg gekrönt, da einerseits solche Änderungen nur im lokalen Scope eines Prozesses erfolgen und andererseits schon zur Entwicklungszeit der einzelnen Prozesse eines Systems eine Abstimmung erfolgen muss, nach welchen Bedingungen eine Aussteuerung der Prioritäten der Prozesse erfolgen soll bzw. welche Prozesse später in einem komplexen System zusammenarbeiten müssen. Deshalb wird heute meist auf prozessübergreifende Prioritätssteuerungen verzichtet. Man überlässt dies dem Standardverhalten des Betriebssystems. Erschwerend kommt hinzu, dass in bestimmten Situationen (z.B. Konflikte zwischen verschiedenen Threads bei Ressourcenzugriffen) das Betriebssystem selbst Prioritäten ändert (Stichwort "priority inversion"), um solche Ressourcenkonflikte aufzulösen. Die betroffenen Prozesse erfahren von einer entsprechenden Prioritätsänderung nur, wenn sie ihre eigene Prioritätseinstellung entsprechend überwachen. Dies ist in der Praxis meist nicht der Fall, so dass die Folge eines Ressourcenkonfliktes mitunter eine solche Veränderung des Laufzeitverhaltens des gesamten Systems sein kann, dass die geplanten Aufgaben nicht mehr erfüllt werden können. Somit gibt es bisher keine befriedigende Lösung zur Steuerung des Laufzeitverhaltens eines komplexen, dynamischen Systems.

Der Erfindung liegt die Aufgabe zugrunde, eine zuverlässige und dynamische Steuerung des Laufzeitverhaltens von Prozessen eines Systems aus der Automatisierungstechnik, basierend auf einem Betriebssystem wie z.B. Windows oder Linux, vorzuschlagen.

Der Erfindung liegt weiter die Aufgabe zugrunde, ein Automatisierungssystem mit einem Betriebssystem, wie beispielsweise Windows oder Linux, anzugeben, bei dem das Laufzeitverhalten von Prozessen zuverlässig und dynamisch steuerbar ist.

Diese Aufgabe wird gelöst durch ein Verfahren zur Steuerung des Laufzeitverhaltens von Prozessen eines Automatisierungssystems mit einem Betriebssystem,
- wobei den Prozessen jeweils eine Priorität zugeordnet wird,
- wobei das Betriebssystem den Prozessen Laufzeit in Abhängigkeit von ihrer Priorität zuordnet,
- wobei ein Schedulingdienst das Starten und Beenden aller Prozesse überwacht,
- wobei dem Schedulingdienst die höchste Priorität im Betriebssystem zugeordnet wird,
- wobei zumindest einem Prozess Metadaten, die zumindest eine Regel über die Priorität des Prozesses enthalten, zugeordnet werden,
- wobei der Schedulingdienst bei Starten eines Prozesses, dem Metadaten zugeordnet sind, die Metadaten auswertet und den Prozess zur Überwachung registriert,
- wobei der Schedulingdienst die registrierten Prozesse auf Einhaltung der je Prozess zumindest einen Regel überwacht und
- wobei der Schedulingdienst die Prioritäten der registrierten Prozesse, deren zumindest eine Regel nicht eingehalten ist, der Regel entsprechend verändert.

Die Aufgabe wird weiter gelöst durch ein Automatisierungssystem mit den in Anspruch 9 angegebenen Merkmalen.

Den an einer Automatisierungsaufgabe beteiligten Prozessen (d.h. zumindest einem davon) werden somit durch das erfindungsgemäße Verfahren Eigenschaften bezüglich der Priorität des jeweiligen Prozesses - Metadaten oder Metainformationen, da die Priorität bereits eine Art Eigenschaft des jeweiligen Prozesses darstellt - zugeordnet, die die Randbedingungen für das Laufzeitverhalten (z.B. zeitliche wie Schichtende) festlegen. Diese Eigenschaften können beispielsweise in den Prozess bzw. das betreffende Programm integriert sein (z.B. binär) oder über Interprozesskommunikationsmechanismen oder durch eine Kombination der genannten Möglichkeiten bereitgestellt werden. Das erfindungsgemäße Verfahren ist unabhängig von der Art der Bereitstellung der Eigenschaftsinformationen (Metadaten). Werden keine solchen Metadaten vorgegeben, dann greift das Standardverhalten des Betriebssystems für diesen Prozess. Dies gilt auch für weitere Prozesse, die nicht an der Automatisierungsaufgabe beteiligt sind. Der zusätzlich benötigte spezielle Schedulingdienst ist immer mit höchster Priorität im Betriebssystem registriert und überwacht, welche Prozesse gestartet und beendet werden. Handelt es sich um einen Prozess, der zusätzlich die oben erwähnten Eigenschaften (Metadaten) anbietet, dann werden diese beim Start des entsprechenden Prozesses ausgewertet und der Prozess wird zur weiteren Überwachung und Verwaltung vorgemerkt. Der Schedulingdienst überwacht damit alle Prozesse (und deren Threads), die entsprechende Eigenschaften anbieten, hinsichtlich ihrer Priorität und greift gegebenenfalls prioritätsverändernd ein. Das eigentliche Scheduling der Prozesse wird nach wie vor vom zugrunde liegenden Betriebssystem durchgeführt.

Das Scheduling auf Basis von Eigenschaften von Prozessen erlaubt eine Trennung der Entwicklung der notwendigen Applikationen und der Projektierung einer speziellen Anlage, die mehrere Applikationen in Kombination nutzt. Andernfalls müssten die beteiligten Applikationen sowie schedulingrelevante Informationen (z.B. Schichtzeiten) schon zum Entwicklungszeitpunkt aller beteiligten Applikationen bekannt sein und aufeinander abgestimmt werden. Dies ist aber aufgrund heutiger Anlagenkomplexität kaum möglich. Zudem würde eine spätere Änderung in Anzahl oder Kombination der zusammenarbeitenden Applikationen, z.B. aufgrund veränderter Schichtzeiten, nicht ohne weiteres möglich sein. Ein entscheidender Vorteil des erfindungsgemäßen Verfahrens ist also die Trennung in die herkömmliche Applikationsentwicklung der notwendigen Applikationen und in die Fähigkeit, den Applikationen / Prozessen beschreibende Metainformationen (Prozesseigenschaften) für eine spätere anlagenspezifische Nutzung hinzuzufügen (Arbeitsteilung Entwicklung - Projektierung / Systemintegration), die eine Flexibilität bezüglich der Berücksichtigung individueller Merkmale eines Systems erlaubt.

Prozesse, die keine Metadaten unterstützen (anbieten), können dabei weiterhin betrieben werden. Sie unterliegen damit der alleinigen Verwaltung des Betriebssystems. Dadurch ist eine Kompatibilität mit Systemen ohne den spezialisierten Schedulingdienst gewährleistet, so dass Prozesse mit Metadaten und solche ohne Metadaten gemeinsam und ohne Änderungen betrieben werden können.

Der Schedulingdienst und die attributierten Prozesse erlauben darüber hinaus eine feingranularere bzw. effizientere Zuteilung / Verwaltung der Ressource Rechenleistung. Die vorhandenen Rechenleistung kann besser entsprechend den anstehenden Aufgaben genutzt werden, da durch die Metadaten zusätzliche die Verwaltung betreffende Informationen bereitstehen. Dies kann in der Folge zu Einsparungen bei der Hardware führen, da durch eine effizientere Ressourcennutzung gegebenenfalls weniger performante Hardware eingesetzt werden kann, die in der Regel auch günstiger ist.

Zudem können typische Probleme bei Ressourcen-Konflikten in heutigen Systemen (z.B. "priority inversion") zumindest für die eigenschaftsbehafteten Prozesse durch den Schedulingdienst vermieden werden. Die Nutzung von Eigenschaftswerten für Prozesse zum Scheduling erlaubt eine flexible Abstimmung aller an einer Lösung beteiligten Prozesse nach beliebigen Kriterien.

In einer vorteilhaften Form der Ausgestaltung wird der Schedulingdienst in das Betriebssystem integriert. Der spezialisierte Schedulingdienst, der Eigenschaften von Prozessen berücksichtigt, kann in verschiedenen Alternativen realisiert werden, je nachdem, welche Möglichkeiten zur Integration in ein bestehendes Betriebssystm bestehen (Nutzung von Standard-Windows-Produkten oder einer eigenen Linux-Distribution, die eine bessere Integration erlaubt). Je nachdem, wie der Schedulingdienst integriert wird, ist eine exaktere Steuerung der eigenschaften-behafteten Prozesse möglich. Eine Integration des speziellen Schedulingdienstes in das Betriebssystem selbst erlaubt eine sehr genaue Berücksichtigung der Prozesseigenschaften. Eine Realisierung des Schedulingdienstes als Dienst oder eigener Prozess erlaubt nur eine ungenauere Steuerung, da dann der Schedulingdienst und die überwachten eigenschaften-behafteten Prozesse dem Schedulingverfahren des zugrunde liegenden Betriebssystems unterliegen. Dennoch sollte dies für die meisten Automatisierungsanwendungen genügen, sofern keine harten Echtzeitanforderungen vorliegen. Eine einfache Integration in bestehende Multipurpose-Betriebssysteme ist also bei dem erfindungsgemäßen Verfahren möglich. Der neue Schedulingdienst wäre als Ergänzung zur Rechenzeitverwaltung durch das Betriebssystem zu sehen. Im einfachsten Fall wäre keine Änderung am Betriebssystem notwendig.

In einer weiteren vorteilhaften Ausführungsform werden die Metadaten zumindest eines Prozesses in einer zusätzlichen Datei abgelegt. Dies kann z.B. durch parallel zu den Programmen installierte Dateien mit entsprechender Namenskonvention, die ein Auffinden der Dateien ermöglicht, erfolgen, die eine einfache Änderung der Metadaten, auch während des laufenden Betriebs einer Anlage, erlauben. Werden die Eigenschaften der Prozesse somit extern, d.h. außerhalb der Programme, bereitgestellt, dann kann das Eigenschaftskonzept auf beliebige Applikationen angewendet werden, ohne dass die betroffenen Applikationen selbst angepasst werden müssen.

In einer weiteren vorteilhaften Ausführungsform werden die Metadaten zumindest eines Prozesses in einem zentralen Eigenschaftsdienst gespeichert. Hierfür wird ebenfalls eine einfache Änderung der Metadaten, auch während des laufenden Betriebs einer Anlage, ermöglicht, wobei durch die zentrale Ablage der Metadaten alle Eigenschaften der betreffenden Prozesse zentral geändert werden können. Dabei können die Eigenschaften der Prozesse beispielsweise vom zentralen Eigenschaftsdienst über einen Server bereitgestellt werden. Und auch in diesem Fall, wie im vorherigen Ausführungsbeispiel, kann das Eigenschaftskonzept auf beliebige Applikationen angewendet werden, ohne dass die betroffenen Applikationen selbst angepasst werden müssen.

In einer weiteren vorteilhaften Ausführungsform enthalten die Metadaten zumindest eines Prozesses zumindest eine von zumindest einem anderen Prozess abhängige Regel. Damit kann der Schedulingdienst Abhängigkeiten zu anderen Prozessen erkennen und entsprechend regulierend eingreifen.

In einer weiteren vorteilhaften Ausführungsform enthalten die Metadaten zumindest eines Prozesses zumindest eine Regel über die Priorität eines anderen Prozesses. Hierdurch kann in den Metadaten eines Prozesses beispielsweise vermerkt sein, dass zu bestimmten Zeiten, in denen dieser Prozess mit hoher Priorität laufen soll, alle anderen Prozesse (oder auch nur einige davon) mit verminderter Priorität weiterlaufen, ohne dass dies bei allen anderen Prozessen vermerkt werden muss.

In einer weiteren vorteilhaften Ausführungsform informiert zumindest ein Prozess den Schedulingdienst über den Eintritt eines Ereignisses. Um dynamisch auf Ereignisse reagieren zu können, bietet der Schedulingdienst entsprechende Schnittstellen über übliche Interprozesskommunikationsmechanismen an. Damit haben die eigenschaften-behafteten Prozesse die Möglichkeit, den Schedulingdienst über den Eintritt relevanter Ereignisse zu informieren. Der Schedulingdienst kann damit entsprechend den Eigenschaften der betroffenen Prozesse auf das Ereignis prioritätssteuernd reagieren.

In einer weiteren vorteilhaften Ausführungsform wird dem Schedulingdienst zumindest eine Eigenschaft zugeordnet, mittels derer das Schedulingverhalten konfiguriert wird. D.h. der Dienst selbst kann auch über Eigenschaften (Metadaten) verfügen, die sein Verhalten beeinflussen und damit eine flexible Konfiguration des Schedulingverhaltens erlauben.

In einer weiteren vorteilhaften Ausführungsform enthalten die Metadaten zumindest eines Prozesses zumindest eine Information bezüglich eines nicht-prioritätsspezifischen Bereichs, wie insbesondere Zugriffsschutz oder System-Ressourcenverwaltung, die vom Schedulingdienst oder einem speziell dafür vorgesehenen Dienst ausgewertet wird. Auf diese Weise kann das Konzept der Anreicherung von Prozessen eines Systems mit Metainformationen zur Erleichterung der späteren aufgabenspezifischen Abstimmung auch auf andere Bereiche neben dem Scheduling ausgedehnt werden (z.B. Sicherheitskonzepte / Zugriffsschutz, System-Ressourcenverwaltung, Assetmanagement etc, um nur einige Beispiele zu nennen).

Im Folgenden wird die Erfindung anhand der in den Figuren dargestellten Ausführungsbeispiele näher beschrieben und erläutert. Es zeigen:
- FIG 1: eine schematische Darstellung von Prozessen in ei- nem Automatisierungssystem und
- FIG 2: ein Anwendungsbeispiel mit Prozessen zugeordneten Metadaten.

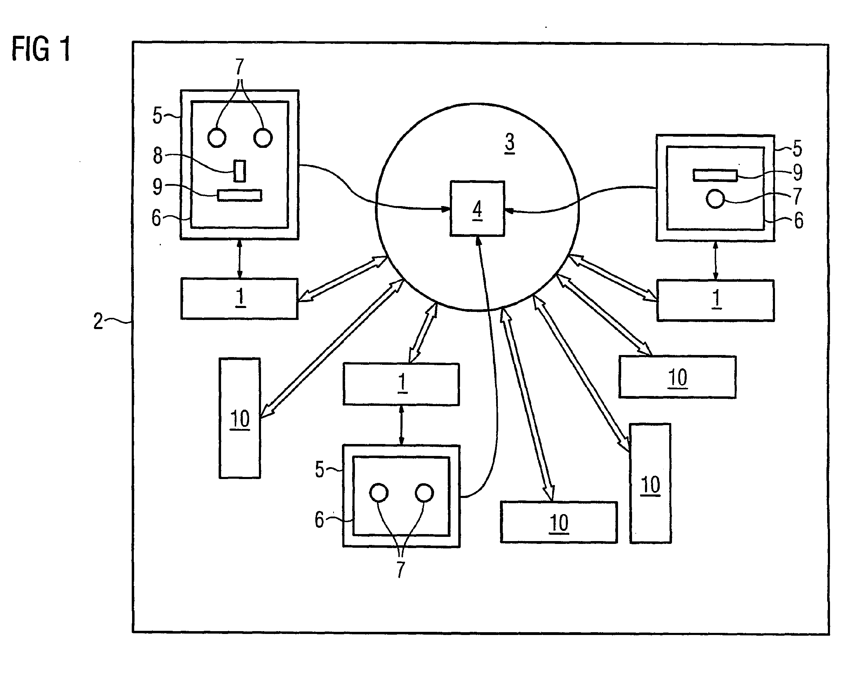

Fig 1 zeigt eine schematische Darstellung von Prozessen 1, 10 in einem Automatisierungssystem 2 mit einem Betriebssystem 3, wobei den Prozessen 1, 10 jeweils eine Priorität zugeordnet ist und das Betriebssystem 3 den Prozessen 1, 10 Laufzeit in Abhängigkeit von ihrer Priorität zuordnet. Einigen Prozessen 1 sind dabei Metadaten 6 zugeordnet, die zumindest eine Regel 7, 8 über die Priorität des jeweiligen Prozesses 1 enthalten, wobei die zumindest eine Regel 7, 8 unabhängig 7 oder abhängig 8 von einem anderen Prozess sein kann. Die Metadaten 6 können zudem auch Regeln 9 über die Priorität eines anderen Prozesses 1, 10 enthalten. Die Metadaten 6 sind in dem dargestellten Ausführungsbeispiel in separaten Dateien 5 abgelegt, so dass sie 6 auch während des laufenden Betriebs des Automatisierungssystems 2 geändert werden können. Zudem kann durch die Speicherung der Metadaten 6 in separaten Dateien 5 das Eigenschaftskonzept auf beliebige Applikationen 1, 10 angewendet bzw. erweitert werden, ohne dass die betroffenen Applikationen 1, 10 selbst angepasst werden müssen, sei es durch die Erstellung einer neuen Datei 5 mit Metadaten 6 für einen bislang noch nicht attributierten Prozess 10 oder durch Aufnahme einer Regel 7-9, wobei sich die Regel 9 auch auf die Priorität eines anderen Prozesses beziehen kann, in eine bestehende Datei 5.

In das Betriebssystem 3 des Automatisierungssystems 2 ist ein Schedulingdienst 4 integriert, der das Starten und Beenden von Prozessen 1, 10 überwacht. Dieser Schedulingdienst 4 läuft immer mit höchster Priorität im Betriebssystem 3. Wird ein Prozess 1 gestartet, dem Metadaten 6 zugeordnet sind, werden diese vom Schedulingdienst 4 ausgewertet und der Prozess 1 zur weiteren Überwachung und Verwaltung vorgemerkt. Entspricht nun die Priorität eines überwachten Prozesses 1 nicht der der Regel 7-9 entsprechenden Priorität, so greift der Schedulingdienst 4 prioritätsverändernd ein. Dies wird im Normalfall dann der Fall sein, wenn ein in einer Regel 7-9 vorgegebenes Ereignis eintritt und der Schedulingdienst 4 die Priorität des Prozesses 1 entsprechend der Regel 7-9 anpasst, eine Änderung der Prioritäten kann aber auch bei Ressourcen-konflikten vom Betriebssystem 3 initiiert werden, um die Konflikte aufzulösen (Stichwort "priority inversion"). In jedem Fall wird für die überwachten Prozesse 1 sichergestellt, dass ihre Priorität den Regeln 7-9 entspricht. Für die nicht überwachten Prozesse 10, denen keine Metadaten 6 zugeordnet sind, greift das Standardverhalten des Betriebssystems 3. Dabei ist zu beachten, dass Prozessen 1, 10 auch Metadaten 6 zugeordnet sein können, ohne dass ihnen eine Datei 5 mit Metadaten 6 zugeordnet ist, beispielsweise durch Regeln 9 in den Dateien 5 über Prioritäten anderer Prozesse 1, 10 oder durch einen zentralen Eigenschaftsdienst. Dies sei aber im dargestellten Beispiel nicht der Fall.

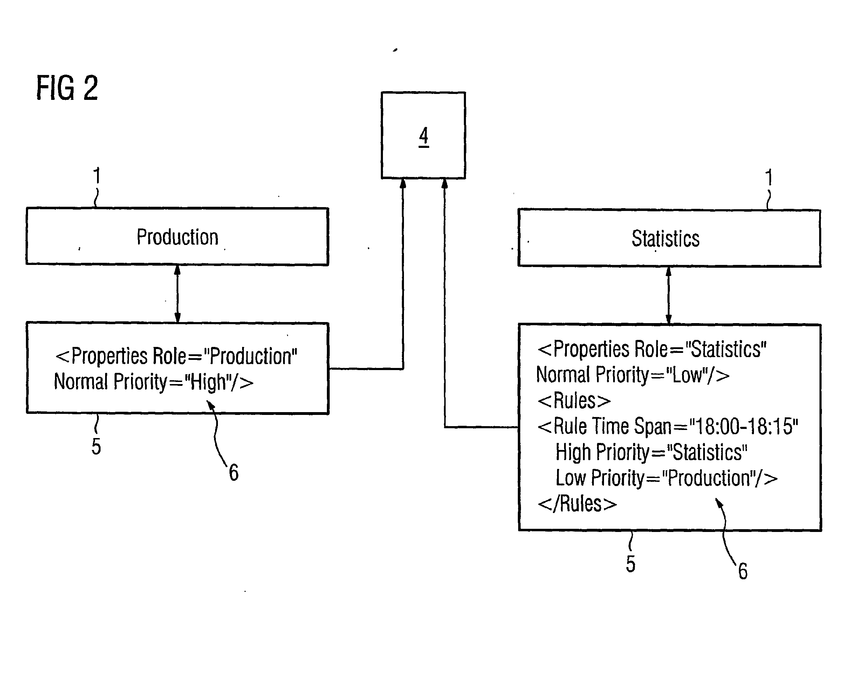

Fig 2 zeigt ein Anwendungsbeispiel mit Prozessen 1 zugeordneten Metadaten 6. An diesem vereinfachten Szenario aus beispielsweise der Automobilindustrie sind zwei Applikationen 1 beteiligt: Ein Produktionssteuerungs- und Überwachungsprozess ("Production", App1.exe) sowie ein Prozess zur Erstellung von Betriebsstatistiken ("Statistics", App2.exe). Beide Applikationen 1 sollen parallel im 7*24-Stunden-Betrieb permanent arbeiten, während der normalen Produktionszeiten des Automobilwerks. Jeweils zum Schichtwechsel wird die Produktion angehalten bzw. vermindert und die Betriebsstatistiken zur abgelaufenen Schicht werden erstellt (z.B. produzierte Fahrzeuge nach bestimmten Kriterien, Materialverbrauch, Störungen etc.). Dies bedeutet, dass zum jeweiligen Schichtwechsel die Erstellung der Betriebsstatistiken eine höhere Priorität erhalten soll, als die Produktionssteuerung und -überwachung. Dennoch sollen beide Prozesse 1 kontinuierlich weiterlaufen. Eine solche Abhängigkeit von Prozessprioritäten von den Betriebszeiten lässt sich über Metadaten 6 der beteiligten Prozesse 1 und dem spezialisierten Schedulingdienst 4 lösen.

Diese Metadaten 6 sind im dargestellten Szenario in eigenen Dateien 5 abgelegt, die zum einfachen Auffinden beispielsweise einer einfachen Namenskonvention gehorchen: App1.exe.properties bzw. App2.exe.properties. Dabei ist in den Metadaten 6 des "Production"-Prozesses 1 vermerkt, dass er normalerweise mit hoher Priorität laufen soll, während in den Eigenschaften 6 des Prozesses 1 zur Erstellung der Betriebsstatistiken vermerkt ist, dass während der Fertigungszeiten nur eine geringe Priorität für den Prozess benötigt wird. Für den Zeitraum unmittelbar bei Schichtwechsel sollte hingegen für eine bestimmte Zeitdauer (im Beispiel 15 Minuten) eine hohe Priorität für den "Statistics"-Prozess 1 verwendet werden, während die "Production" 1 auf niedrige Priorität gesetzt wird. Dabei ist die letztgenannte Regel ebenfalls in den Metadaten 6 für den "Statistics"-Prozess 1 abgelegt, ist also ein Beispiel für die in Figur 1 beschriebene Regel 9 über die Priorität eines anderen Prozesses 1.

Anstelle der Festlegung einer Zeitdauer von 15 Minuten könnte das Ende der Statistikerstellung auch durch das Setzen eines entsprechenden Schedulingevents an den Schedulingdienst 4 signalisiert werden, der anschließend die Prozesse 1 daraufhin wieder mit ihrer normalen Priorität laufen lässt. Eine andere denkbare Ausführung betrifft die Festlegung der Prioritäten an sich: Anstatt die Prozesse 1 je nach Zeitpunkt jeweils mit hoher oder niedriger Priorität laufen zu lassen, könnte auch beispielsweise der "Production"-Prozess 1 immer mit normaler Priorität laufen, während der "Statistics"-Prozess 1 normalerweise mit niedriger Priorität läuft und nur zur Erstellung der Statistiken bei Schichtwechsel auf hohe Priorität gesetzt wird. Auf diese Weise müsste die Priorität der Production" gar nicht geändert werden. In jedem Fall wird die Laufzeit, d.h. die Rechenzeitanteile, der Prozesse 1, über den Schedulingdienst 4 entsprechend der zeitlichen Abläufe genau zugeteilt.

Zusammenfassend betrifft die Erfindung die Steuerung des Laufzeitverhaltens von Prozessen eines Automatisierungssystems. Für eine zuverlässige und dynamische Steuerung des Laufzeitverhaltens wird ein Verfahren vorgeschlagen, wobei den Prozessen jeweils eine Priorität zugeordnet wird, wobei das Betriebssystem des Automatisierungssystems den Prozessen Laufzeit in Abhängigkeit von ihrer Priorität zuordnet, wobei ein Schedulingdienst das Starten und Beenden aller Prozesse überwacht, wobei dem Schedulingdienst die höchste Priorität im Betriebssystem zugeordnet wird, wobei zumindest einem Prozess Metadaten, die zumindest eine Regel über die Priorität des Prozesses enthalten, zugeordnet werden, wobei der Schedulingdienst bei Starten eines Prozesses, dem Metadaten zugeordnet sind, die Metadaten auswertet und den Prozess zur Überwachung registriert, wobei der Schedulingdienst die registrierten Prozesse auf Einhaltung der je Prozess zumindest einen Regel überwacht und wobei der Schedulingdienst die Prioritäten der registrierten Prozesse, deren zumindest eine Regel nicht eingehalten ist, der Regel entsprechend verändert.

## Patentansprüche

1. Verfahren zur Steuerung des Laufzeitverhaltens von Prozessen (1, 10) eines Automatisierungssystems (2) mit einem Betriebssystem (3),
- wobei den Prozessen (1, 10) jeweils eine Priorität zugeordnet wird,
- wobei das Betriebssystem (3) den Prozessen (1, 10) Laufzeit in Abhängigkeit von ihrer Priorität zuordnet,
- wobei ein Schedulingdienst (4) das Starten und Beenden aller Prozesse (1, 10) überwacht,
- wobei dem Schedulingdienst (4) die höchste Priorität im Betriebssystem (3) zugeordnet wird,
- wobei zumindest einem Prozess (1) Metadaten (6), die zumindest eine Regel (7) über die Priorität des Prozesses enthalten, zugeordnet werden,
- wobei der Schedulingdienst (4) bei Starten eines Prozesses (1), dem Metadaten (6) zugeordnet sind, die Metadaten (6) auswertet und den Prozess (1) zur Überwachung registriert,
- wobei der Schedulingdienst (4) die registrierten Prozesse (1) auf Einhaltung der je Prozess (1) zumindest einen Regel (7) überwacht und
- wobei der Schedulingdienst (4) die Prioritäten der registrierten Prozesse (1), deren zumindest eine Regel (7) nicht eingehalten ist, der Regel (7) entsprechend verändert.

2. Verfahren nach Anspruch 1,
wobei der Schedulingdienst (4) in das Betriebssystem (3) integriert wird.

3. Verfahren nach Anspruch 1 oder 2,
wobei die Metadaten (6) zumindest eines Prozesses (1) in einer zusätzlichen Datei (5) abgelegt werden.

4. Verfahren nach einem der vorhergehenden Ansprüche,
wobei die Metadaten (6) zumindest eines Prozesses (1) in einem zentralen Eigenschaftsdienst gespeichert werden.

5. Verfahren nach einem der vorhergehenden Ansprüche,
wobei die Metadaten (6) zumindest eines Prozesses (1) zumindest eine von zumindest einem anderen Prozess (1, 10) abhängige Regel (8) enthalten.

6. Verfahren nach einem der vorhergehenden Ansprüche,
wobei die Metadaten (6) zumindest eines Prozesses (1) zumindest eine Regel (9) über die Priorität eines anderen Prozesses (1, 10) enthalten.

7. Verfahren nach einem der vorhergehenden Ansprüche,
wobei zumindest ein Prozess (1, 10) den Schedulingdienst (4) über den Eintritt eines Ereignisses informiert.

8. Verfahren nach einem der vorhergehenden Ansprüche,
wobei dem Schedulingdienst (4) zumindest eine Eigenschaft zugeordnet wird, mittels derer das Schedulingverhalten konfiguriert wird.

9. Verfahren nach einem der vorhergehenden Ansprüche,
wobei die Metadaten (6) zumindest eines Prozesses (1) zumindest eine Information bezüglich eines nichtprioritätsspezifischen Bereichs, wie insbesondere Zugriffsschutz oder System-Ressourcenverwaltung, enthalten, die vom Schedulingdienst (4) oder einem speziell dafür vorgesehenen Dienst ausgewertet wird.

10. Automatisierungssystem (2) mit einem Betriebssystem (3) sowie Mitteln zur Durchführung eines Verfahrens nach einem der Ansprüche 1 bis 9.

## Claims

1. Method for controlling the runtime behaviour of processes (1, 10) of an automation system (2) with an operating system (3),
- with each of the processes (1, 10) being assigned a priority,
- with the operating system (3) assigning runtime to the processes (1, 10) depending on their priority,
- with a scheduling service (4) monitoring the starting and ending of all processes (1, 10),
- with the scheduling service (4) being assigned the highest priority in the operating system (3),
- with at least one process being assigned (1) metadata (6) containing at least one rule (7) about the priority of the process,
- with the scheduling service (4) being assigned the metadata (6) when a process (1) is started, the metadata (6) being evaluated and the process (1) registered for monitoring,
- with the scheduling service (4) monitoring the registered processes (1) for adherence to the at least one rule (7) per process and
- with the scheduling service (4) changing the priorities of the registered processes (1), of which the at least one rule (7) is not adhered to in accordance with the rule (7).

2. Method according to claim 1,
with the scheduling service (4) being integrated into the operating system (3).

3. Method according to claim 1 or 2,
with the measurement data (6) of at least one process (1) being stored in an additional file (5).

4. Method according to one of the previous claims,
with the metadata (6) of at least one process (1) being stored in a central property service.

5. Method according to one of the previous claims, with the metadata (6) of at least one process (1) containing a rule (8) dependent on at least one other process (1, 10).

6. Method according to one of the previous claims, with the metadata (6) of at least one process (1) containing at least one rule (9) about the priority of another process (1, 10) .

7. Method according to one of the previous claims,
with at least one process (1, 10) informing the scheduling service (4) about the entry of an event.

8. Method according to one of the previous claims,
with the scheduling service (4) being assigned at least one property by means of which the scheduling behaviour will be configured.

9. Method according to one of the previous claims,
with the metadata (6) of at least one process (1) containing information relating to a non-priority-specific area, such as especially access protection or system resource administration, which will be evaluated by the scheduling service (4) or by a service specifically provided for the purpose.

10. Automation system (2) with an operating system (3) as well as means for executing a method according to one of claims 1 to 9.

## Revendications

1. Procédé pour commander le comportement d'exécution de processus (1, 10) d'un système d'automatisation (2) avec un système d'exploitation (3),
- une priorité étant respectivement affectée aux processus (1, 10),
- le système d'exploitation (3) affectant aux processus (1, 10) une durée d'exécution en fonction de leur priorité,
- un service d'ordonnancement (4) surveillant le démarrage et la fin de tous les processus (1, 10),
- le service d'ordonnancement (4) se voyant affecter la priorité la plus élevée dans le système d'exploitation (3),
- des métadonnées (6) qui contiennent au moins une règle (7) sur la priorité du processus étant affectées à au moins un processus (1),
- le service d'ordonnancement (4), au démarrage d'un processus (1) auquel des métadonnées (6) sont affectées, évaluant les métadonnées (6) et enregistrant le processus (1) à des fins de surveillance,
- le service d'ordonnancement (4) surveillant les processus enregistrés (1) quant au respect de l'au moins une règle (7) par processus (1) et
- le service d'ordonnancement (4) modifiant les priorités des processus enregistrés (1), dont l'au moins une règle (7) n'est pas respectée, conformément à la règle (7).

2. Procédé selon la revendication 1, le service d'ordonnancement (4) étant intégré au système d'exploitation (3).

3. Procédé selon la revendication 1 ou 2, les métadonnées (6) d'au moins un processus (1) étant déposées dans un fichier supplémentaire (5).

4. Procédé selon l'une des revendications précédentes, les métadonnées (6) d'au moins un processus (1) étant stockées dans un service de caractéristiques central.

5. Procédé selon l'une des revendications précédentes, les métadonnées (6) d'au moins un processus (1) contenant au moins une règle (8) dépendante d'au moins un autre processus (1, 10).

6. Procédé selon l'une des revendications précédentes, les métadonnées (6) d'au moins un processus (1) contenant au moins une règle (9) sur la priorité d'un autre processus (1, 10).

7. Procédé selon l'une des revendications précédentes, au moins un processus (1, 10) informant le service d'ordonnancement (4) de la survenance d'un événement.

8. Procédé selon l'une des revendications précédentes, le service d'ordonnancement (4) se voyant affecter une caractéristique au moyen de laquelle le comportement d'ordonnancement est configuré.

9. Procédé selon l'une des revendications précédentes, les métadonnées (6) d'au moins un processus (1) contenant au moins une information concernant une zone non spécifique à la priorité, telle que, notamment, la protection d'accès ou la gestion de ressources du système, laquelle est évaluée par le service d'ordonnancement (4) ou un service spécialement prévu à cet effet.

10. Système d'automatisation (2) avec un système d'exploitation (3) ainsi que des moyens pour exécuter un procédé selon l'une des revendications 1 à 9.
